## Europäisches Patentamt

## European Patent Office
(19)
## Office européen des brevets

(11) Veröffentlichungsnummer: **0 023 541**
**B1**

(12) # EUROPÄISCHE PATENTSCHRIFT

(45) Veröffentlichungstag der Patentschrift:
14.03.84

(51) Int. Cl.³: **B 41 F 33/00**

(21) Anmeldenummer: **80102922.4**

(22) Anmeldetag: **24.05.80**

(54) **System zum Messen des Anstelldruckes zwischen zwei Schmitzringen einer Rotationsdruckmaschine.**

(30) Priorität: **21.07.79 DE 2929694**

(43) Veröffentlichungstag der Anmeldung:
**11.02.81 Patentblatt 81/6**

(45) Bekanntmachung des Hinweises auf die Patenterteilung:
**14.03.84 Patentblatt 84/11**

(84) Benannte Vertragsstaaten:
**CH DE FR GB LI**

(56) Entgegenhaltungen:
**DE - A - 1 944 446**
**DE - B - 1 042 923**
**FR - A - 1 502 229**

(73) Patentinhaber: **M.A.N.-ROLAND Druckmaschinen Aktiengesellschaft, Stadtbachstrasse 1,
D-8900 Augsburg (DE)**

(72) Erfinder: **Fischer, Hermann, Pferseerstrasse 15,
D-8900 Augsburg (DE)**

BUNDESDRUCKEREI BERLIN

## System zum Messen des Anstelldruckes zwischen zwei Schmitzringen einer Rotationsdruckmaschine

Die Erfindung betrifft ein System zum Messen des Anstelldruckes zweier unter Verwendung von Schmitzringen gegeneinanderlaufender Druckwerkzylinder einer Rotationsdruckmaschine durch Aufbringen einer definierten Gegenkraft.

Aus der DE-Auslegeschrift 2 300 946 ist bereits eine Vorrichtung zum Messen der Vorspannung zweier Arbeitszylinder einer Rotationsdruckmaschine bekannt. Diese besteht aus zwei parallelen Meßwalzen mit unterschiedlichen, aber wesentlich kleineren Durchmessern als den Durchmessern der Arbeitszylinder, die in den Spalt zwischen den Schmitzringen der Arbeitszylinder hintereinander einbringbar sind, wobei der Abstand der Mittelachsen der beiden Meßwalzen meßbar ist. Die Messung erfolgt mittels einer Meßuhr, die an der größeren der beiden Meßwalzen befestigt ist und mit ihrem Meßfuß auf die kleinere Meßwalze tastet.

In der Zeitschrift »IPM-Mitteilungen« ist in Jahrgang 7, Heft 5, vom November 1965 auf den Seiten 217 bis 228, insbesondere auf den Seiten 219 und 220, ein Kraftmeßgerät zur Bestimmung der Anpreßkraft zwischen zwei Druckwerkzylindern beschrieben, das aus zwei an ihren Enden über schmale, dünne Stege miteinander verbundenen Keilen besteht, welche zum Auseinanderdrücken der beiden Druckwerkzylinder hydraulisch aneinanderpreßbar sind. Der bis zum Abheben der beiden Druckwerkzylinder erforderliche Hydraulikdruck ist dann ein direktes Maß für den Anpreßdruck zwischen den Druckwerkzylindern. Durch die besondere Bauart mit zwei voneinander abgesetzten Verbindungsstegen ist dieses Meßgerät an sich für die Verwendung für Messungen an Schmitzringen geeignet.

Diese bekannte Vorrichtung hat jedoch den Nachteil, daß die Keile bei der Messung infolge der auftretenden außerordentlich hohen Kräfte in der Größenordnung von mehreren Tonnen, d. h. einigen hundert KN, schon merklich in die Oberfläche der Druckwerkzylinder bzw. der Schmitzringe eindrücken, so daß einmal das Meßergebnis verfälscht und zum anderen die betreffenden Oberflächen beschädigt werden.

Des weiteren weisen die beiden vorangehend beschriebenen bekannten Vorrichtungen den Nachteil auf, daß eine Messung ohne methodische Fehler nur bei einer (in der Praxis nie erreichbaren) Null-Toleranz der Zylinder oder Meßringe möglich ist.

Der vorliegenden Erfindung liegt deshalb die Aufgabe zugrunde, ein System zum Messen des Anstelldruckes zwischen zwei unter Verwendung von Schmitzringen gegeneinanderlaufenden Druckwerkzylindern einer Rotations-Druckmaschine aufzuzeigen, die ohne fälschende oder schädigende Verformung und ohne enge Tolerierung der aneinander angestellten Oberflächen eine exakte objektive Messung ermöglicht.

Diese Aufgabe wird gemäß dem Kennzeichen des Patentanspruchs 1 gelöst.

Ein wesentlicher Vorteil des erfindungsgemäßen Systems besteht darin, daß eine objektive Messung des Schmitzringdruckes auf zwei verschiedene Weisen möglich ist. Zum einen kann der Meßdruck direkt an dem Druckkörper abgelesen werden, wobei der Zeitpunkt, zu dem der Druck abzulesen ist, durch ein Meßgerät definierbar ist, mit dem das Meßblech mit einer vorbestimmten Zugkraft aus den Schmitzringen herausgezogen werden kann. Des weiteren bietet die Meßvorrichtung nach der Erfindung die Möglichkeit, den Schmitzringdruck direkt mittels eines Meßstreifens im Abhebebereich der Schmitzringe zu messen.

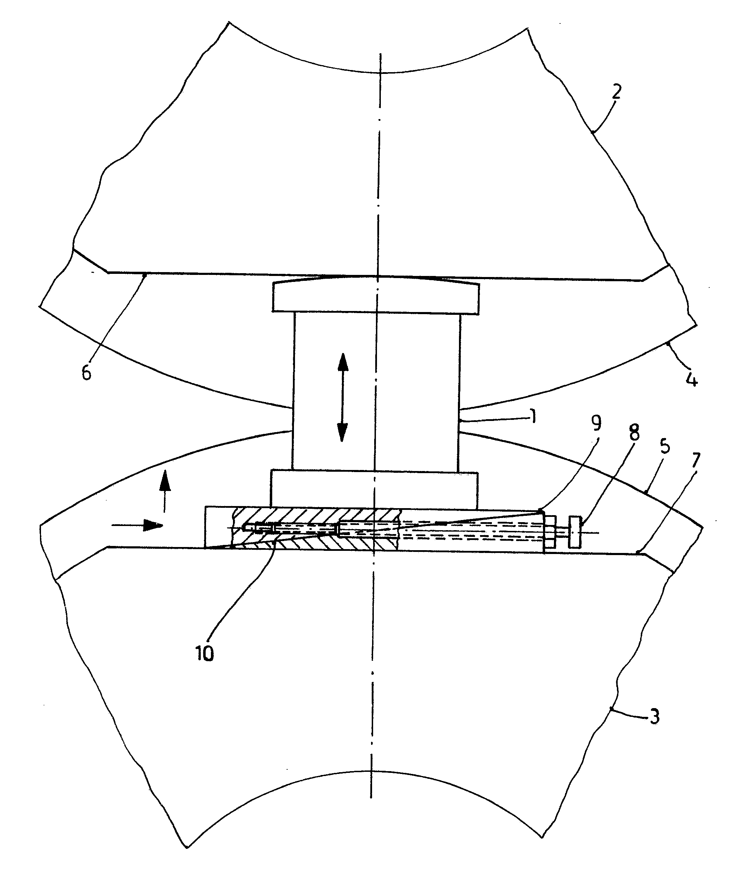

Im folgenden wird die Erfindung anhand eines Ausführungsbeispiels unter Bezugnahme auf die Zeichnung im einzelnen beschrieben.

In der Zeichnung sind zwei parallel zueinander angeordnete Druckwerkzylinder einer Rotations-Druckmaschine gezeigt. Dies können beispielsweise die beiden Gummizylinder 2 und 3 einer Rotations-Offsetdruckmaschine sein. Die beiden Zylinder 2 und 3 sind in herkömmlicher, nicht näher gezeigter Weise in Seitenwänden gelagert und an ihren Enden mit Schmitzringen versehen. In der Zeichnung sind lediglich die Schmitzringe 4 und 5 an einer Stirnseite der Zylinder 2 und 3 angedeutet.

Zur Messung des Schmitzringdruckes zwischen den Schmitzringen 4 und 5 sind die an den von dem Druckwerkzylinder abgewandten Stirnseiten der Schmitzringe 4 und 5 dargestellten Spannblöcke 6 und 7 mit angefrästen Flächen versehen. Zur Durchführung des Meßverfahrens zur Ermittlung des Schmitzringdruckes werden die Zylinder 2 und 3 in eine Stellung gebracht, bei der sich die angefrästen Flächen der Spannblöcke 6 und 7 gegenüberstehen.

Mit der an dem Spannblock 7 befestigten Höhenverstellvorrichtung kann eine Höhenregulierung der zwischen die Spannblöcke einsetzbaren Meßdose 1 in der Weise vorgenommen werden, daß die Meßdose höher oder niedriger gestellt wird. Für diesen Zweck ist die Höhenverstellvorrichtung aus zwei Teilen 9 und 10 beschaffen, die über eine schiefe Ebene relativ zueinander mit einer Einstellschraube 8 verschiebbar sind. Vorzugsweise besteht zumindest das untere Teil 10 aus einer Magnetplatte, die ohne zusätzliche Befestigungsmittel an dem angefrästen Spannblock 7 haftet.

Anstelle der Meßdose 1 kann auch ein hydraulischer oder pneumatischer Druckkörper verwendet werden.

Zur Ermittlung des Schmitzringdruckes werden die Zylinder 2 und 3 in eine Stellung gebracht, bei der die Meßdose 1 zwischen die angefrästen Spannblöcke 6 und 7 einsetzbar ist. Anschließend erfolgt eine Höhenregulierung der Meßdose mittels der Einstellschraube 8. Durch die Meßdose 1 wird nun ein Zylinder 2 und 3 bzw. die Schmitzringe 4 und 5 auseinanderdrückendes Kraftmoment erzeugt. Nach dem Abheben der Schmitzringe 4 und 5 wird zwischen diese ein Meßblech, beispielsweise in einer Stärke von 0,05 mm, eingelegt und die Meßdose 1 entlastet. Wenn die Meßdose angesprochen hat, wird das Meßblech mit einer vorbestimmten Kraft, die beispielsweise mit einer Federwaage definierbar ist, herausgezogen. Der nun an der Meßdose ablesbare Schmitzringdruck stellt einen objektiven Wert dar.

Eine weitere Möglichkeit zur Messung des Schmitzringdruckes an der Berührungsstelle der beiden Schmitzringe 4 und 5 besteht darin, daß zunächst die Schmitzringe 4 und 5 voneinander abgehoben werden, wonach eine Folie zwischen diese gelegt wird. Durch Nachlassen der Abhebekräfte wird auf der Folie ein Abdruck erzeugt, der eine Aussage über den Druck zwischen den Schmitzringen zuläßt.

Die Drücke können somit bei Zylindern gemessen werden, welche mit den Gummituchaufzügen versehen sind, und bei Zylindern, welche nicht mit Gummituchaufzügen versehen sind. Hierbei kann die Entlastung, welche von der Aufzugsstärke her möglich ist, ermittelt werden.

Aus Sicherheitsgründen wird bei dem vorbeschriebenen Meßvorgang der elektrische Antrieb blockiert. Mittels einer manuellen Dreheinrichtung erfolgt nach elektrischer Absicherung die Einstellung der Zylinder 2 und 3 auf den in der Zeichnung dargestellten Bereich, bei dem sich die angefrästen Spannblöcke 6 und 7 gegenüberstehen.

**Patentansprüche**

1. System zum Messen des Anstelldruckes zweier unter Verwendung von Schmitzringen gegeneinanderlaufender Druckwerkzylinder einer Rotationsdruckmaschine durch Aufbringen einer definierten Gegenkraft, dadurch gekennzeichnet, daß auf parallelen, sich gegenüberstehenden Flächen von Spannblöcken, die an den den Druckwerkzylindern abgewandten Stirnseiten der Schmitzringe vorgesehen sind, ein eine definierte Kraft erzeugendes Druckelement aufgesetzt wird, durch das die Druckwerkzylinder auseinanderpreßbar sind, so daß ein Meßblech zwischen die Schmitzringe einlegbar ist, wonach entweder bei der Verwendung einer Meßdose als Druckelement an dieser die Druckablesung nach deren Ansprechen dann erfolgt, wenn das Meßblech mit einer vorbestimmten Kraft herausziehbar ist oder wenn das Druckelement ein hydraulischer oder pneumatischer Druckkörper ist, nach dessen Entlastung der auf dem als Folie ausgebildeten Meßblech vom Anstelldruck abhängige Abdruck ausgewertet wird.

2. System nach Anspruch 1, dadurch gekennzeichnet, daß die Fläche eines Spannblockes mit einer Höhenverstellvorrichtung aus zwei gegeneinander verschiebbaren, übereinanderliegenden keilförmigen Teilen versehen ist.

3. System nach Anspruch 2, dadurch gekennzeichnet, daß zumindest das auf der Fläche des Spannblockes aufliegende, keilförmige Teil magnetisch ist.

**Claims**

1. System for measuring, by the application of a specific counter force, the setting pressure of two printing unit cylinders in a rotary printing machine, running against each other by means of bearer rings, characterised in that there is placed on parallel, opposed surfaces of stress blocks, which are provided on the faces of the bearer rings facing away from the printing unit cylinders, a pressure element producing a specific force, with which element the printing unit cylinders can be pushed away from each other, so that a measuring plate can be inserted between the bearer rings, whereupon either, if a load cell is used as a pressure element, the pressure reading from this is taken, after it has responded, at the time when the measuring plate can be removed with a predetermined amount of force, or, if the pressure element is a hydraulic or pneumatic pressure body, the impression on the measuring plate, having the form of a foil, which impression is dependent on the setting pressure, is evaluated after said pressure body has been relieved of pressure.

2. System according to claim 1, characterised in that the surface of a stress block is provided with a height-adjusting device consisting of two superimposed wedge-shaped parts displaceable relative to each other.

3. System according to claim 2, characterised in that at least the wedge-shaped part lying on the surface of the stress block is magnetic.

**Revendications**

1. Système pour mesurer la pression d'application de deux cylindres d'impression, tournant l'un contre l'autre en utilisant des bagues de marquage, d'une machine d'impression rotative par application d'une force antagoniste définie, caractérisé en ce qu'on place sur des surfaces parallèles, et placées l'une en regard de l'autre, de blocs de serrage qui sont disposés sur les côtés frontaux, opposés aux cylindres d'impression, des bagues de marquage, un élément de pression produisant une force définie par laquelle les cylindres d'impression peuvent être écartés l'un de l'autre de manière qu'une tôle de mesure puisse être interposée entre les bagues de marquage et ensuite, lors de l'utilisation d'une boîte de mesure comme élément de pression, on effectue la lecture de la pression sur celle-ci après sa sollicitation lorsque la tôle de mesure peut être sortie avec une force prédéterminée ou bien, lorsque l'élément de pression est un corps de pression hydraulique ou pneumatique, on effectue après sa décharge, l'analyse de l'empreinte, fonction de la pression d'application, sur la tôle de mesure agencée sous forme d'une feuille.

2. Système selon la revendication 1, caractérisé en ce que la surface d'un bloc de serrage est pourvue d'un dispositif de réglage de hauteur se composant de deux parties en forme de coin placées l'une au-dessus de l'autre et déplaçables par translation l'une contre l'autre.

3. Système selon la revendication 2, caractérisé en ce qu'au moins la partie en forme de coin s'appliquant contre la surface du bloc de serrage est magnétique.